# EUROPÄISCHE PATENTANMELDUNG

(11) **EP 1 372 206 A2**
(43) Veröffentlichungstag der Anmeldung: **17.12.2003**
(21) Anmeldenummer: 03010743.7
(22) Anmeldetag: 14.05.2003
(51) Int. Cl.: H01M 8/16

(54) **Kompakte Bioreaktor-Brennstoffzellen-Anlage**

(30) Priorität: 10.06.2002 DE 10225559
(71) Anmelder: FORSCHUNGSZENTRUM JÜLICH GMBH, 52425 Jülich (DE)
(72) Erfinder: Thom, Frank, 44869 Bochum (DE); Riensche, Ernst, 52428 Jülich (DE)

(57) **Zusammenfassung**

Die Erfindung betrifft eine Bioreaktor-Brennstoffzellen-Anlage zur Kultivierung von Mikroorganismen im Bioreaktor mittels dem CO₂-Abgas der Brennstoffzelle. Die Anlage ist dadurch gekennzeichnet, dass der Bioreaktor oberhalb der Brennstoffzelle angeordnet ist. Dadurch kann der heiße CO₂-Abgasstrom in besonders einfacher Weise an die Mikroorganismen, insbesondere Algen heran geführt werden.

## Beschreibung

Die Erfindung betrifft eine Bioreaktor-Brennstoffzellen-Anlage gemäß des Oberbegriffs des Patentanspruchs 1.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, beispielsweise die SOFC-Brennstoffzelle (solid oxide fuel cell) aus der Druckschrift DE 44 30 958 C1 sowie die PEM-Brennstoffzelle aus der Druckschrift DE 195 31 852 C1.

Die SOFC-Brennstoffzelle zählt zu den Hochtemperaturbrennstoffzellen, da ihre Betriebstemperatur bis zu 1000 °C betragen kann. An der Kathode einer Hochtemperaturbrennstoffzelle bilden sich in Anwesenheit des Oxidationsmittels Sauerstoffionen. Die Sauerstoffionen diffundieren durch den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Es ist bekannt, auch kohlenwasserstoffhaltige Brennstoffe wie Methan unter Verwendung einer Brennstoffzelle zur Stromerzeugung zu verwenden. Als kohlenwasserstoffhaltiger Brennstoff kann auch Erdgas vorgesehen sein. Typischerweise findet innerhalb oder außerhalb der Hochtemperatur-Brennstoffzelle (z. B. SOFC: solid oxide fuel cell; MCFC: molten carbonate fuel cell) eine Reformierung des Methans mit Wasserdampf zu CO und Wasserstoff statt. Diese reagieren an der Anode elektrochemisch zu Wasser und CO₂. Da das entstehende CO₂ zu den Treibhausgasen zählt, führt diese Reaktion regelmäßig zu Umweltemissionen.

Aus Maeda et al. (K. Maeda; M. Owada; N. Kimura; K. O-mata; I. Karube: CO₂ fixation from flue gas on coalfired thermal plant by microalgae. In: Energy Convers. Mgmt., 1995, Vol. 36, No. 6-9, pp. 717-720) ist bekannt, das Abgas eines Heizkraftwerkes Algen der Spezies Chlorella zwecks Eliminierung zuzuleiten.

Aus US3421942 ist eine Vorrichtung bekannt, bei der das CO₂ einer Brennstoffzelle zu Algen zwecks Photosynthese geleitet wird. Die Algen produzieren dabei Biomasse, die wiederum in einem Kreislauf einem "zoologischen Verbraucher" als Nahrungsquelle dient. Nachteilig ist der dort genannte Bioreaktor und das Verfahren zum Betreiben sehr aufwendig und störanfällig.

Aufgabe der Erfindung ist es, einen Bioreaktor bereit zu stellen, der das Abgas einer Brennstoffzelle nutzt und dabei einfach zu betreiben ist.

Die Aufgabe wird durch einen Bioreaktor gemäß Hauptanspruch gelöst. Vorteilhafte Ausgestaltungen ergeben sich aus den darauf rückbezogenen Patentansprüchen.

Der Bioreaktor dient der Kultivierung von Mikroorganismen, und zwar insbesondere der Kultivierung von Algen, mittels dem CO₂-Abgas einer Brennstoffzelle. Er ist dadurch gekennzeichnet, dass er oberhalb der Brennstoffzelle angeordnet ist.
Dadurch ist gewährleistet, dass der heiße CO₂-Abgasstrom leicht an den Ort des Verbrauchs im Bioreaktor geführt werden kann.
Brennstoffzellen weisen gegenüber anderen Stromerzeugungssystemen neben der Bereitstellung des zu eliminierenden Schadstoffs einen wesentlichen zusätzlichen Vorteil auf, da die Abgasströme der Brenngas- und der Luftseite getrennt aus den Zellen austreten. Der CO₂reiche Abgasstrom kann auf einfache Weise selektiv z. B. Algen zugeführt werden.
Als Brennstoffzelle ist insbesondere eine Hochtemperatur-Brennstoffzelle (SOFC; MCFC) vorgesehen, da diese die für ein Algenwachstum unter optimierten Temperaturbedingungen nötige Wärme liefert.

Das heiße Abgas wird mit dem CO₂ über ein möglichst kurzes Rohrleitungssystem von der Brennstoffzelle zum Bioreaktor geleitet. Hierdurch werden Wärmeverluste durch zu lange Übertragungswege minimiert.

In einer weiteren Ausgestaltung der Erfindung ist die Bioreaktor-Brennstoffzellenanlage als platzsparende Modulbauweise konzipiert. Durch eine platzsparende Anordnung werden Investitionskosten gesenkt.

### Ausführungsbeispiel:

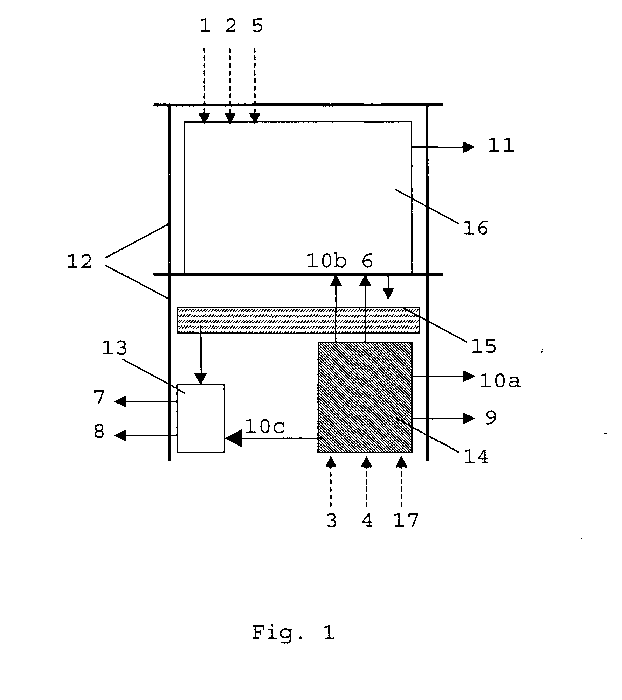

Im weiteren wird die Erfindung an Hand eines Ausführungsbeispiels und der beigefügten Figur näher beschrieben.

Kennzeichnendes Merkmal der Anordnung ist der vertikale, mindestens aus zwei Ebenen bestehende Anlagenaufbau. Bei diesem befindet sich das stromerzeugende Brennstoffzellensystem 14, z. B. ein Brennstoffzellenstapel, unterhalb eines Algen-Bioreaktors 16. Ein Sedimentationssystem 15 für die Algen ist unterhalb des Bioreaktors 16 angeordnet. Des weiteren befindet sich ein Trocknungssystem 13 unterhalb des Sedimentationssystems 15, so dass im vorliegenden Fall von einer Anlage aus drei Ebenen ausgegangen wird. Das Trocknungssystem 13 kann aber auch auf gleicher Höhe wie das Sedimentationssystem 15 angeordnet sein.

Neben dem platzsparenden Effekt bzgl. der Anlagengrundfläche wird auf diese Weise die Algenmasse vom Bioreaktor 16 bis zum Trocknungssystem 13 unter Ausnutzung der Schwerkraft transportiert. Pumpenergie wird eingespart.

Alle Anlagenteile können in einem doppelstöckigen Container 12 angeordnet sein.

Zur Gewährleistung des Algenwachstums ist sicherzustellen, dass ein Nährstoffeintrag 1 (von z. B. Stickstoff, Phosphor) in Form von Salzen sowie ein Wasser- und Lichteintrag 2, 5 in den Bioreaktor 16 erfolgt. Die obere Containerwandung und der obere Teil des Bioreaktors 16 ist hierzu zumindest teilweise aus lichtdurchlässigem Material (z. B. Plexiglas) gefertigt. Des weiteren werden der Algensuspension die CO₂-haltigen Abgase des Brennstoffzellensystems 14 über eine Begasungseinheit 6 zugeführt und nicht verbrauchte Gase (11) im oberen Bereich des Reaktors wieder abgeführt. Die Begasungseinheit 6 besteht aus einer möglichst kurzen Rohrleitung, bzw. aus einem kurzen Rohrleitungssystem, welches Wärmeverluste minimiert. Es ist als Gasverteiler (z. B. Rohrverzweigungen) ausgestaltet, damit eine hinreichend gleichmäßige Verteilung des Gasstroms über der Bodenfläche erreicht wird. Betriebsmittel der Brennstoffzelle sind beispielsweise Erdgas 3, Wasser 4 und Luft 17.

Ist eine ausreichende Algenkonzentration im Bioreaktor 16 erreicht, wird die Suspension unter Ausnutzung der Schwerkraft durch Öffnen von Klappen im Boden des Bioreaktors in das Sedimentationssystem 15 geleitet. Die sedimentierte Algenmasse wird danach durch Öffnen von Klappen im Boden des Sedimentationssystems einer Trocknungseinheit 13 zugeführt, die z. B. aus einer Zentrifuge und einem Bandtrockner besteht. Getrocknetes Algenpulver 8 und überschüssiges Wasser bzw. Kultursuspension 7 verlassen die Trocknungseinheit.

Die kompakte Anordnung ermöglicht eine optimale Wärmeintegration. Die räumliche Nähe von Brennstoffzellensystem 14 und wärmeverbrauchenden Komponenten des Algensystems erlaubt bei detaillierter Ausgestaltung eine direkte Nutzung eines Teils der Abwärme des Brennstoffzellensystems 14 für Trocknungszwecke (Abwärme 10c) und für die Kultivierung (Abwärme 10b), die z. B. über Wärmeabstrahlung zur Verfügung gestellt wird. Dafür ist eine räumlich nahe Anordnung (< 10 cm) eines Teils der Außenfläche der Brennstoffzelleneinheit und des Bioreaktors günstig. Der Wärmeüberschuss 10a steht für andere Zwecke zur Verfügung.

Produkte eines solchen Systems sind somit elektrischer Strom 9, Wärme 10a-c und Algen 8. Die CO₂-Emission ist minimiert. Das getrocknete Algenpulver kann anschließend konfektioniert werden (z. B. Formgebung in Pillenform) und als hochwertiges, proteinreiches Nahrungsmittel verwendet werden.

Selbstverständlich ist das Prinzip der Erfindung auch mit anderen Stromerzeugungssystemen als Brennstoffzellen realisierbar. Neben Brennstoffzellen können z. B. Blockheizkraftwerke in Frage kommen, in denen durch thermische Verbrennung von Brennstoffen Strom und Wärme produziert werden.

Der Bioreaktor kann in allen möglichen verfahrenstechnisch sinnvollen Ausführungsformen vorliegen, beispielsweise kann eine Rühreinrichtung vorgesehen sein.

Die Erfindung ist hierauf keineswegs beschränkt. Vielmehr können je nach Ausgestaltung des Reaktors und Art der Verbrennung auch thermophile Mikroorganismen im Bioreaktor herangezüchtet werden. Solche Mikroorganismen sind insbesondere hitzeresistent bis zu einer Temperatur von 100°C.

Auf Grund der physiologischen Vielfalt von Mikroorganismen, insbesondere von prokaryotischen Mikroorganismen (Bakterien) kann das erfindungsgemäße Bioreaktor-Stromerzeugungssystem auch dazu verwendet werden, mehr oder weniger jeden beliebigen bei Verbrennungsprozessen auftretenden gasförmigen Schadstoff durch geschickte Anordnung des Bioreaktors zum Stromerzeugungssystem mit entsprechend gewählten Mikroorganismen zu eliminieren. Als Beispiel hierzu sei die Ausnutzung von Denitrifikanten genannt. Hierdurch können gasförmige NOₓ-Verbindungen wirkungsvoll aus einem heißen Abgasstrom eliminiert werden.

Es können auch Mischkulturen verwendet werden, da biochemisch zur Eliminierung von Verbindungsgemischen häufig solche Mischkulturen verwendet werden müssen.

Es können hitzeresistente Mikroorganismen auch als gentechnologisch veränderte Mikroorganismen mit besonderen Abbaukapazitäten eingesetzt werden. Dadurch ist die gezielte Eliminierung von Schadstoffen aus heißen Abgasströmen gewährleistet.

## Patentansprüche

1. Bioreaktor-Brennstoffzellenanlage zur Kultivierung von Mikroorganismen im Bioreaktor mittels dem CO₂-Abgas der Brennstoffzelle,
**dadurch gekennzeichnet, dass**
der Bioreaktor (16) oberhalb der Brennstoffzelle (14) angeordnet ist.

2. Bioreaktor-Brennstoffzellenanlage nach Anspruch 1, **gekennzeichnet durch**
einen vertikalen, mindestens aus zwei Ebenen bestehenden Aufbau.

3. Bioreaktor-Brennstoffzellenanlage nach einem der vorhergehenden Ansprüche,
**gekennzeichnet durch**
ein Sedimentationssystem (15) unterhalb des Bioreaktors (16).

4. Bioreaktor-Brennstoffzellenanlage nach einem der vorhergehenden Ansprüche,
**gekennzeichnet durch**
ein Trocknungssystem (13) unterhalb des Bioreaktors (16).

5. Bioreaktor-Brennstoffzellenanlage nach einem der vorhergehenden Ansprüche,
**gekennzeichnet durch**
eine Modulbauweise der Anlage.
